# EUROPÄISCHE PATENTANMELDUNG

(11) **EP 3 872 674 A1**
(43) Veröffentlichungstag der Anmeldung: **01.09.2021**
(21) Anmeldenummer: 20159314.2
(22) Anmeldetag: 25.02.2020
(51) Int. Cl.: G06F 30/23

(54) **SYSTEM, VERFAHREN ZUM ANGEBEN VON MECHANISCHEN EIGENSCHAFTEN UND COMPUTERLESBARES-SPEICHERMEDIUM**

(71) Anmelder: Heraeus Amloy Technologies GmbH, 63450 Hanau (DE)
(72) Erfinder: WACHTER, Hans-Jürgen, 64846 Gross-Zimmern (DE); MILKE, Eugen, 61130 Nidderau (DE); SHAHABI, Hamed Shakur, 63457 Hanau (DE); THEISEN, Florian, 63477 Maintal (DE); KLOSCH-TRAGESER, Michael, 63579 Freigericht (DE)
(74) Vertreter: Kilchert, Jochen

(57) **Zusammenfassung**

Ein System (20) aufweisend:
- eine Simulationseinheit (23), die dazu ausgebildet ist, ein Abkühlverhalten (40, 53, 54, 72) zumindest eines Teils eines zu fertigenden Bauteils (8, 79) mit amorphen Eigenschaften zu bestimmen;
- eine Recheneinheit (24), die dazu ausgebildet ist, unter Berücksichtigung des bestimmten Abkühlverhaltens (40, 53, 54, 74) zumindest für einen Teil des zu fertigenden Bauteils (8, 79) mindestens einen Amorphizitätswert (29, 76, AW1, AW2, AW3) zu bestimmen;
- eine Prädiktionseinheit (27), die dazu ausgebildet ist, unter Berücksichtigung einer Geometrie des zu fertigenden Bauteils (8, 79), des mindestens einen Amorphizitätswertes (29, 76, AW1, AW2, AW3), mindestens eines Herstellungsparameters (31) und/oder eines Herstellungsverfahrens, mechanische Eigenschaften (26) des zu fertigenden Bauteils (8, 79) anzugeben.

## Beschreibung

Die Erfindung betrifft ein System, ein Verfahren zum Angeben von mechanischen Eigenschaften für ein zu fertigendes Bauteil und ein entsprechendes computerlesbares-Speichermedium.

Amorphe Metalle sind eine neuartige Werkstoffklasse, die bei anderen Werkstoffen nicht realisierbare physikalische Eigenschaften bzw. Kombinationen von Eigenschaften aufweisen.

Von amorphen Metallen spricht man, wenn Metalllegierungen auf atomarer Ebene keine kristalline, sondern eine amorphe Struktur aufweisen. Die für Metalle ungewöhnliche amorphe Atomanordnung führt zu einzigartigen Kombinationen physikalischer Eigenschaften. Amorphe Metalle sind im Allgemeinen härter, korrosionsbeständiger und fester als gewöhnliche Metalle bei gleichzeitig hoher Elastizität. So entstehen keine verschiedenen Oberflächenpotentiale, sodass keine Korrosion entstehen kann.

Seit ihrer Entdeckung am California Institute of Technology sind metallische Gläser Gegenstand umfangreicher Forschung. Im Laufe der Jahre gelang es, die Prozessierbarkeit und Eigenschaften dieser Materialklasse kontinuierlich zu verbessern. Waren die ersten metallischen Gläser noch einfache, binäre Legierungen, deren Herstellung Abkühlgeschwindigkeiten im Bereich von 106 Kelvin pro Sekunde erforderten, lassen sich neuere, komplexere Legierungen bereits bei deutlich geringeren Abkühlgeschwindigkeiten im Bereich einiger K/s in den Glaszustand überführen. Dies hat erheblichen Einfluss auf die Prozessführung sowie die realisierbaren Werkstücke. Die Abkühlgeschwindigkeit, ab der eine Kristallisation der Schmelze ausbleibt und die Schmelze im Glaszustand erstarrt, wird als kritische Abkühlrate bezeichnet. Die kritische Abkühlrate ist eine systemspezifische, stark von der Zusammensetzung der Schmelze abhängige Größe, welche zudem die maximal erreichbaren Bauteildicken festlegt. Bedenkt man, dass die in der Schmelze gespeicherte Wärmeenergie ausreichend schnell durch das System abtransportiert werden muss, wird klar, dass sich aus Systemen mit hohen kritischen Abkühlraten lediglich Werkstücke mit geringer Dicke fertigen lassen. Anfänglich wurden metallische Gläser daher meist nach dem Schmelzspinnverfahren hergestellt. Die Schmelze wird hierbei auf ein rotierendes Kupferrad abgestreift und erstarrt glasartig in Form von dünnen Bändern bzw. Folien mit Dicken im Bereich einiger hundertstel bis zehntel Millimeter. Durch die Entwicklung neuer, komplexer Legierungen mit deutlich geringeren kritischen Abkühlraten, können zunehmend andere Herstellungsverfahren genutzt werden. Heutige Massivglas-bildende metallische Legierungen lassen sich bereits durch Gießen einer Schmelze in gekühlte Kupferkokillen in den Glaszustand überführen. Die realisierbaren Bauteildicken liegen dabei legierungsspezifisch im Bereich einiger Millimeter bis Zentimeter. Derartige Legierungen werden als metallische Massivgläser bezeichnet. Heutzutage ist eine Vielzahl solcher Legierungssysteme bekannt.

Die Unterteilung metallischer Massivgläser erfolgt gewöhnlich anhand der Zusammensetzung, wobei man das Legierungselement mit dem höchsten Gewichtsanteil als Basiselement bezeichnet. Die bestehenden Systeme umfassen beispielsweise Edelmetall-basierte Legierungen wie Gold-, Platin, und Palladiumbasierte metallische Massivgläser, frühe Übergangsmetall basierte Legierungen wie z.B. Titan- oder Zirkonium-basierte metallische Massivgläser, späte Übergangsmetallbasierte Systeme auf Basis von Kupfer-, Nickel- oder Eisen, aber auch Systeme auf Basis von seltenen Erden, z.B. Neodym oder Terbium.

Metallische Massivgläser weisen im Vergleich zu klassischen kristallinen Metallen typischer Weise folgende Eigenschaften auf:
- eine höhere spezifische Festigkeit, was zum Beispiel dünnere Wandstärken ermöglicht,
- eine höhere Härte, wodurch die Oberflächen besonders kratzfest sein können,
- eine viel höhere elastische Dehnbarkeiten und Resilienzen,
- eine thermoplastische Formbarkeit und
- eine höhere Korrosionsbeständigkeit.

Aufgrund ihrer vorteilhaften Eigenschaften wie z.B. einer hohen Festigkeit und dem Ausbleiben einer Erstarrungsschwindung sind metallische Gläser, insbesondere metallische Massivgläser, sehr interessante Konstruktionswerkstoffe, die sich prinzipiell für die Herstellung von Bauteilen in Serienfertigungsverfahren wie dem Spritzguss eignen, ohne dass weitere Bearbeitungsschritte nach erfolgter Formgebung zwingend erforderlich wären. Um beim Abkühlen aus der Schmelze eine Kristallisation der Legierung zu verhindern, muss eine kritische Abkühlrate überschritten werden. Je größer jedoch das Volumen der Schmelze ist, desto langsamer kühlt die Schmelze ab. Wird eine bestimmte Probendicke überschritten, kommt es zu einer Kristallisation, bevor die Legierung amorph erstarren kann.

Neben den hervorragenden mechanischen Eigenschaften metallischer Gläser ergeben sich aus dem Glaszustand auch einzigartige Prozessierungsmöglichkeiten. So lassen sich metallische Gläser nicht nur durch schmelzmetallurgische Verfahren formen, sondern auch über ein thermoplastisches Formen bei vergleichsweise niedrigen Temperaturen analog zu thermoplastischen Kunststoffen oder Silikatgläsern formgebend verarbeiten. Hierzu wird das metallische Glas zunächst über den Glasübergangspunkt erwärmt und verhält sich dann wie eine hochviskose Flüssigkeit, die bei relativ niedrigen Kräften umgeformt werden kann. Im Anschluss an die Verformung wird das Material wieder unter die Glasübergangtemperatur abgekühlt.

Bei der Verarbeitung von amorphen Metallen wird die natürliche Kristallisation durch rasches Abkühlen der Schmelze unterbunden, so dass den Atomen die Beweglichkeit genommen wird, bevor sie eine Kristallanordnung einnehmen können. Viele Eigenschaften kristalliner Materialen werden durch Störungen im atomaren Aufbau, sogenannte Gitterdefekte beeinflusst bzw. bestimmt.

Durch das schnelle Abkühlen wird der Schrumpf des Materials reduziert, sodass bei amorphen Metallen genauere Bauteilgeometrien erreicht werden können. Plastische Verformung erfolgt erst bei Dehnungen über 2 %. Im Vergleich dazu verformen sich kristalline, metallische Werkstoffe in der Regel bereits bei deutlichen geringeren Dehnungen irreversibel. Die Kombination aus hoher Streckgrenze bei hoher elastischer Dehnung resultiert zudem in einem hohen Speichervermögen an elastischer Energie.

Die Wärmeleitfähigkeit des verwendeten Materials setzt der Abkühlgeschwindigkeit jedoch eine physikalische Grenze, da die im Bauteil enthaltene Wärme über die Oberfläche an die Umgebung abgegeben werden muss. Dies führt zu Einschränkungen in der Herstellbarkeit von Bauteilen und in der Anwendbarkeit von Herstellungsverfahren.

Es sind unterschiedliche Verfahren zur Herstellung von Werkstücken aus amorphen Metallen bekannt. So ist es möglich, Werkstücke unter Verwendung von additiven Fertigungsverfahren, wie dem 3D-Druck herzustellen. Dabei können die amorphen Eigenschaften des Werkstücks durch das Einstellen der Prozessparameter, wie der Scan-Geschwindigkeit, der Energie des Laserstrahls oder des abzufahrenden Musters, sichergestellt werden.

Ein Vorteil der additiven Fertigungstechnik ist, dass prinzipiell jede erdenkliche Geometrie realisiert werden kann. Ferner kann es von Vorteil sein, dass bei additiven Fertigungsverfahren kein gesonderter Kühlprozess notwendig ist, da durch das schichtweise Herstellen des Werkstücks und einer Einstellung der Größe des Schmelzpools über Laserenergie und Verfahrweg des Lasers eine gute Auskühlung gewährleistet sein kann.

Nachteilig bei additiven Fertigungsverfahren sind die zum Zeitpunkt der Anmeldung geringe Aufbauraten gerade bei großdimensionierten Werkstücken. Ferner muss hochreines Pulvermaterial als Ausgangsmaterial für den additiven Fertigungsprozess verwendet werden. Sind Verunreinigungen in dem Material vorhanden, so kann es an den Stellen der Verunreinigung zu Kristallisation kommen, d.h. zu nicht amorphen Metall, welches zu einer Verschlechterung der mechanischen und chemischen Eigenschaften führen kann. Oberflächennah kann es wegen der Verunreinigung notwendig sein, das Werkstück nachzubearbeiten, was aufwendig ist. Darüber hinaus kommt es bei der additiven Fertigung immer zu einer gewissen Rauigkeit an der Oberfläche des Werkstücks, sodass dies in den meisten Fällen durch Schleifen oder Fräsen nachbearbeitet werden muss.

Eine weitere Fertigungsmöglichkeit bietet das Spritzgießen. Dabei können zum Zeitpunkt der Anmeldung Gewichte von Werkstücken im Bereich von 80-100g realisiert werden. Üblicherweise wird das zu verwendende Material mittels induktivem Aufheizen innerhalb von ca. 20 Sekunden auf ca. 1050°C erhitzt und homogenisiert.

Nach dem Aufheizen wird das schmelzflüssige Material mittels eines Stempels in eine Form gedrückt. Dabei ist es für die Materialeigenschaften wichtig, dass wenn die Form vollständig mit Material gefüllt ist, das Material innerhalb der Form überall eine Temperatur oberhalb des Materialschmelzpunktes aufweisen sollte. Um amorphe Materialeigenschaften zu erzielen muss das flüssige Material innerhalb der Form anschließend schnell auf unterhalb der Glasumwandlungstemperatur abgekühlt werden.

Die möglichen Geometrien beim Spritzgießen sind aufgrund der Abkühlgeschwindigkeit des Materials auf Wandstärken von 0,3 -7,0 mm begrenzt. Bei größeren Wandstärken ist die Abkühlgeschwindigkeit zu gering, sodass sich kristalline Strukturen ausbilden bevor das Material auf unterhalb der Glasumwandlungstemperatur abgekühlt ist. Bei kleineren Wandstärken kühlt das Material abhängig von der zu füllenden Länge zu schnell ab und erstarrt bevor die Form gefüllt ist.

Um schon im Vorfeld bei der Konstruktion, der Dimensionierung, der Auswahl des Legierungswerkstoffes, der Auswahl des Herstellungsverfahrens oder Ähnlichem sicherzugehen, dass die dem Werkstoff zugeführte Wärmemenge an die Umgebung hinreichend schnell abgegeben werden kann, kann das Abkühlverhalten simuliert und analysiert werden.

Bei der Auswahl einer geeigneten Legierung, bzw. der Legierungsgüte für ein zu fertigendes Bauteil und seine spezifische Anwendung müssen viele Rahmenbedingungen berücksichtigt werden. Die Legierungsgüte definiert sich entweder über den Anteil von Recyclingmaterial oder über das Verhältnis von amorphen und kristallinen Anteilen in der Legierung. Eine Legierung geringerer Güte verfügt nicht mehr über 100% amorphe Eigenschaften. Damit kann ein Bauteil mit geringer Legierungsgüte nicht für jeden Lastfall verwendet werden.

Es ist daher notwendig, bereits vor dem Fertigen eines Bauteils, die mechanischen Eigenschaften eines zu fertigenden Bauteils zu kennen.

Aus der DE 10 2009 034 840 ist ein Verfahren zum Vorhersagen der Ermüdungsfestigkeit von Metalllegierungen bei sehr hohen Zyklenzahlen bekannt. Bei dem Verfahren wird vorausgesetzt, dass zumindest eine Ermüdungsrissinitiierungsstelle vorliegt. Unter Berücksichtigung der Ermüdungsrissinitiierungsstelle wird unter Verwendung eines modifizierten stochastischen Ermüdungsgrenzenmodells die Ermüdungsfestigkeit berechnet.

Nachteilig an der Lösung der DE 10 2009 034 840 ist, dass keine Informationen gewonnen werden können, wie die Ermüdungsfestigkeit gezielt verbessert werden kann.

Aus der DE 10 2015 110 591 ist ein System zur Vorhersage von Materialeigenschaften einer gegossenen aluminiumbasierten Komponente bekannt. Dabei werden jedoch die spezifischen Eigenschaften und Herstellungsbedingungen amorpher Metalle nicht berücksichtig.

Aus der EP 2595073 ist ein Verfahren zur Optimierung eines Guss-Bauteils bekannt. Bei der Lösung der EP 2595073 wird jedoch keine homogene Materialqualität erreicht.

Ausgehend von diesem Stand der Technik ist es daher Aufgabe der Erfindung, die Fertigung von Bauteilen mit amorphen Eigenschaften zu verbessern. Es ist insbesondere Aufgabe der Erfindung, mechanische Eigenschaften von zu fertigenden Bauteilen mit amorphen Eigenschaften anzugeben. Es weiter insbesondere Aufgabe der Erfindung, eine geeignete Legierung für ein zu fertigendes Bauteil auszuwählen.

Die Aufgabe wird gelöst durch ein System nach Anspruch 1, ein Verfahren nach Anspruch 10 und durch ein computerlesbares-Speichermedium nach Anspruch 19.

Insbesondere wird die Aufgabe gelöst durch ein System, Folgendes aufweisend:
- eine Simulationseinheit, die dazu ausgebildet ist, ein Abkühlverhalten zumindest eines Teils eines zu fertigenden Bauteils mit amorphen Eigenschaften zu bestimmen;
- eine Recheneinheit, die dazu ausgebildet ist, unter Berücksichtigung des bestimmten Abkühlverhaltens zumindest für einen Teil des zu fertigenden Bauteils mindestens einen Amorphizitätswert zu bestimmen;
- eine Prädiktionseinheit, die dazu ausgebildet ist, unter Berücksichtigung einer Geometrie des zu fertigenden Bauteils, des mindestens einen Amorphizitätswertes, mindestens eines Herstellungsparameters, und/oder eines Herstellungsverfahrens, mechanische Eigenschaften des zu fertigenden Bauteils anzugeben.

Ein Kern der Erfindung ist, dass die mechanischen Eigenschaften des zu fertigenden Bauteils vor der eigentlichen Fertigung angegeben werden können. Dies wird dadurch möglich gemacht, dass das Abkühlverhalten zumindest für einen Teil des zu fertigenden Bauteils bestimmt wird und daraus die mechanischen Eigenschaften abgeleitet werden können. Insbesondere bei Bauteilen, die über amorphe Materialeigenschaften verfügen sollen kommt es auf die Abkühlgeschwindigkeit bzw. das Abkühlverhalten bei der Herstellung an. Wird eine kritische Abkühlrate nicht erreicht, so kommt es zu nicht gewünschten kristallinen Strukturen. Darüber hinaus hängt das Ausbilden von kristallinen Strukturen von der verwendeten Legierung ab. Wie eingehend beschrieben, können die Verunreinigungen des verwendeten Materials als Keimbildner dienen und damit zu kristallinen Strukturen führen. Mit der Erfindung ist es möglich, die mechanischen Eigenschaften des zu fertigenden Bauteils unter Berücksichtigung all dieser Eigenschaften und Parameter vorherzusagen. Somit kann eine Entscheidung getroffen werden, für welche Einsatzzwecke sich das zu fertigende Bauteil eignet.

Der Amorphizitätswert kann angeben, über welchen Grad an amorphen Eigenschaften ein Bauteil verfügt. So können zum Beispiel kleinere kristalline Strukturen innerhalb des Bauteils eine Verringerung des Amorphizitätswertes bewirken. Der Verwendung eines Amorphizitätswertes liegt die Überlegung zugrunde, dass es in der Praxis nahezu unmöglich ist, ein Bauteil zu konstruieren, welches über 100 % amorphe Eigenschaften verfügt. Es ist nunmehr möglich, auch Abstufungen eines Amorphizitätswertes anzugeben. Insbesondere ist es durch die Erfindung möglich, aus diesen Abstufungen mechanische Eigenschaften eines Bauteils abzuleiten.

In einer Ausführungsform kann das System eine Datenbankeinheit umfassen, die dazu ausgebildet sein kann, Zuordnungen von Materialeigenschaften und/oder Materialangaben zu Amorphizitätswerten zu speichern.

Eine Datenbankeinheit kann verwendet werden, um unterschiedlichen Amorphizitätswerten unterschiedliche Materialeigenschaften zuzuweisen. So kann die Datenbank in einer Ausführungsform zum Beispiel Angaben über eine Zugfestigkeit, eine Biegefestigkeit, eine Zyklenfestigkeit und/oder Viskositätsdaten speichern. Diese Angaben können Amorphizitätswerten und/oder Materialien zugeordnet werden. Die Prädiktionseinheit kann somit dazu ausgebildet sein, zu einem bestimmten Material und/oder dem bestimmten Amorphizitätswert Materialeigenschaften aus der Datenbank auszulesen. Darüber hinaus ist es möglich, dass die Prädiktionseinheit dazu ausgebildet sein kann, für einen bestimmten Amorphizitätswert und zugeordnete Materialeigenschaften mechanische Eigenschaften des zu fertigenden Bauteils abzuleiten.

Die in der Datenbankeinheit gespeicherten Daten können durch Experimente bestimmt werden. Dabei können gefertigte Bauteile im Labor auf ihre Materialeigenschaften hin untersucht werden, sodass die Datenbank realistische gemessene Werte enthält. Darüber hinaus ist es denkbar, zusätzlich oder alternativ simulierte Daten in der Datenbankeinheit zu speichern.

In einer Ausführungsform kann die Recheneinheit ferner dazu ausgebildet sein, unter Berücksichtigung des bestimmten Abkühlverhaltens, eine Abkühlgeschwindigkeit für zumindest einen Teil des zu fertigenden Bauteils zu bestimmen.

In der beschriebenen Ausführungsform ist es möglich, dass unter Berücksichtigung des simulierten Abkühlverhaltens, eine Abkühlgeschwindigkeit für zunächst einen Teil des zu fertigen Bauteils bestimmt wird. Damit kann auch für einen Teil des gesamten Bauteils eine Abkühlgeschwindigkeit bestimmt werden, sodass es auch möglich ist, unterschiedlichen Teilen eines Bauteils unterschiedliche Amorphizitätswerte zuzuordnen. Insbesondere ist es denkbar, dass das zu fertigende Bauteil in eine Vielzahl von Teilbereichen unterteilt wird, wobei die Recheneinheit dazu ausgebildet sein kann, für jeden der Teilbereiche einen individuellen Amorphizitätswert anzugeben. Somit ist es möglich, Materialeigenschaften, Herstellungsparameter und mechanische Eigenschaften des zu fertigen Bauteils für einzelne Teilbereiche des zu fertigenden Bauteils anzugeben.

In einer Ausführungsform kann die Recheneinheit ferner dazu ausgebildet sein, eine/die bestimmte Abkühlgeschwindigkeit mit einer, insbesondere legierungsabhängigen, kritischen Abkühlrate zu vergleichen, wobei die Recheneinheit dazu ausgebildet sein kann, die Bestimmung des Amorphizitätswertes unter Berücksichtigung des Vergleichs durchzuführen.

Um zu bestimmen, ob amorphe Eigenschaften bei der Fertigung des zu fertigenden Bauteils erreicht werden, kann eine kritische Abkühlrate herangezogen werden. Diese kritische Abkühlrate kann beispielsweise durch die Datenbankeinheit zusammen mit einer zugehörigen Legierung bzw. einem zugehörigen Material gespeichert sein. Durch den Vergleich der Abkühlgeschwindigkeit mit der kritischen Abkühlrate kann der Amorphizitätswert bestimmt werden.

In einer Ausführungsform kann die Datenbankeinheit dazu ausgebildet sein, eine Zuordnung von Materialeigenschaften zu kritischen Abkühlraten und/oder Amorphizitätswerten zu speichern.

Um die mechanischen Eigenschaften des zu fertigenden Bauteils zu bestimmen, kann die Datenbankeinheit entsprechende Materialeigenschaften zu kritischen Abkühlraten und/oder Amorphizitätswerten speichern. Dadurch ist es möglich, dass die Prädiktionseinheit entsprechende Materialeigenschaften aus der Datenbankeinheit auslesen kann.

In einer Ausführungsform kann das zu fertigende Bauteil durch eine Bauteilbeschreibung, insbesondere durch ein CAD-Modell, angegeben sein, wobei die Simulationseinheit dazu ausgebildet sein kann, die Bestimmung des Abkühlverhaltens unter Verwendung der Bauteilbeschreibung auszuführen.

In der beschriebenen Ausführungsform kann das zu fertigendes Bauteil durch eine Bauteilbeschreibung angegeben sein. Dafür eignet sich insbesondere ein CAD-Modell. Eine Bauteilbeschreibung kann daher als eine digitale Repräsentation des zu fertigenden Bauteils angesehen werden. Die Bauteilbeschreibung kann zum Beispiel Angaben zu den zu verwendenden Materialien umfassen. Darüber hinaus kann die Bauteilbeschreibung einfach zwischen einzelnen Systemkomponenten ausgetauscht werden.

In einer Ausführungsform kann eine/die Bauteilbeschreibung eine Vielzahl von Volumenelementen angeben, wobei die Simulationseinheit dazu ausgebildet sein kann, für zumindest einen Teil der Volumenelemente, vorzugsweise für alle Volumenelemente, ein Abkühlverhalten zu bestimmen.

Mit der beschriebenen Ausführungsform ist es möglich, dass zu jedem Volumenelement oder zu einem Teil der Volumenelemente ein Abkühlverhalten bestimmt wird. Darüber hinaus ist es denkbar, dass die Recheneinheit dazu ausgebildet ist, zu jedem Volumenelement einen Amorphizitätswert zu bestimmen. Die Prädiktionseinheit kann in einer Ausführungsform ferner dazu ausgebildet sein, für jedes Volumenelement oder eine Teilmenge der Volumenelemente mechanische Eigenschaften anzugeben.

In einer Ausführungsform kann die Simulationseinheit dazu ausgebildet sein, das Abkühlverhalten auch unter Berücksichtigung einer zu verwendenden Legierung zu bestimmen.

Die Bestimmung des Abkühlverhaltens kann verbessert werden, wenn eine zu verwendende Legierung berücksichtigt wird. Darüber hinaus ist es möglich, dass die Simulationseinheit dazu ausgebildet ist, das Abkühlverhalten für eine Vielzahl von möglichen Legierungen zu berechnen. Diese Berechnung kann sequenziell oder parallel ausgeführt werden. Durch das Berücksichtigen einer oder einer Vielzahl von Legierungen, können Amorphizitätswerte einzelnen Legierungen zugeordnet werden. Dabei kann die Prädiktionseinheit dazu ausgebildet sein, für unterschiedliche Legierungen die mechanischen Eigenschaften des zu fertigenden Bauteils anzugeben. Dadurch ist es möglich, dass die am besten geeignete Legierung zur Fertigung des Bauteils ausgewählt werden kann. Insgesamt wird somit die Herstellung des zu fertigenden Bauteils verbessert.

In einer Ausführungsform kann der mindestens eine Herstellungsparameter eine Angabe zu einer Einspritztemperatur in eine Formkammer und/oder eine Angabe zu einer Einspritzgeschwindigkeit in eine Formkammer umfassen.

Bei der Verwendung eines Spritzgussverfahrens zur Herstellung des zu fertigenden Bauteils kann der mindestens eine Herstellungsparameter beispielsweise eine Einspritztemperatur in eine Formkammer oder auch eine Einspritzgeschwindigkeit in eine Formkammer umfassen. Es ist ferner denkbar, dass eine Vorschubgeschwindigkeit eines Stempels als der mindestens eine Herstellungsparameter angegeben ist. Diese Parameter haben einen erheblichen Einfluss auf die Temperatur des Werkstoffs in der Formkammer und somit darauf, ob amorphe Eigenschaften erreicht werden oder nicht.

In einer Ausführungsform kann die Prädiktionseinheit dazu ausgebildet sein, mindestens einen mechanischen Lastfall für das zu fertigende Bauteil zu simulieren, insbesondere unter Verwendung einer/der Bauteilbeschreibung und/oder einer FEM-Simulation.

Mit der beschriebenen Ausführungsform ist es möglich, verschiedene Lastfälle für das zu fertigende Bauteil zu simulieren. So kann durch die Verwendung einer Simulation das Wirken einer Kraft an verschiedenen Stellen des Bauteils simuliert werden. Auch können Temperaturverläufe durch unterschiedliche Umwelteinflüsse simuliert werden. Letztlich wird es durch die beschriebene Ausführungsform möglich gemacht, dass der Nutzer des zu fertigenden Bauteils vor der Fertigung des Bauteils Lastfälle definieren kann, denen das Bauteil standhalten können muss.

In einer Ausführungsform können die mechanischen Eigenschaften eine Angabe umfassen, ob das zu fertigende Bauteil dem mindestens einen mechanischen Lastfall unter Berücksichtigung der Geometrie des zu fertigenden Bauteils, des mindestens einen Herstellungsparameters und/oder dem Herstellungsverfahren standhält.

Die mechanischen Eigenschaften können also angeben, ob das zu fertigende Bauteil einem definierten Lastfall standhalten wird oder nicht. Dabei kann die Angabe material- bzw. legierungsspezifisch sein. Das bedeutet, dass die mechanischen Eigenschaften des zu fertigenden Bauteils für eine zu verwendende Legierung eine Angabe enthalten, ob die definierten Lastfälle mit dem zu fertigenden Bauteil möglich sind.

In einer Ausführungsform kann die Prädiktionseinheit dazu ausgebildet sein, die angegebenen mechanischen Eigenschaften des zu fertigenden Bauteils mit mindestens einem Sollwert zu vergleichen. Die Prädiktionseinheit kann ferner dazu ausgebildet sein, die Simulationseinheit zu aktivieren, wenn die mechanischen Eigenschaften des zu fertigenden Bauteils von dem Sollwert abweichen bzw. nicht den geforderten Qualitätskriterien entsprechen. Die Simulationseinheit kann dazu ausgebildet sein, nach der Aktivierung das Abkühlverhalten für eine andere als eine zuvor verwendete Legierung zu bestimmen. Zusätzlich oder alternativ kann die Simulationseinheit dazu ausgebildet sein, den mindestens einen Amorphizitätswert für eine Vielzahl unterschiedlicher Legierungen zu bestimmen.

Durch die Ausführungsform wird eine Rückkopplung definiert, die solange durchgeführt werden kann, bis die mechanischen Eigenschaften des zu fertigenden Bauteils dem Sollwert entsprechen oder besser sind.

In einer Ausführungsform kann das System eine Fertigungsanlage umfassen, die dazu ausgebildet sein kann, das zu fertigende Bauteil unter Verwendung des mindestens einen Herstellungsparameters zu fertigen, insbesondere durch ein additives Fertigungsverfahren oder ein Spritzgießverfahren.

Auch ist es möglich, dass das zu fertigende Bauteil durch das beschriebene System unmittelbar auch gefertigt werden kann. Insgesamt wird somit eine effiziente Prozesskette definiert.

In einer Ausführungsform kann das System ein Benutzerterminal aufweisen, das dazu ausgebildet sein kann, eine Bauteilbeschreibung des zu fertigenden Bauteils über ein Kommunikationsnetzwerk an die Simulationseinheit zu übertragen.

Ein besonderer Vorteil entsteht, wenn ein Benutzer eine Bauteilbeschreibung über ein Kommunikationsnetzwerk an die Simulationseinheit übertragen kann. Beispielsweise kann ein Benutzer an einem Benutzerterminal, vorzugsweise einem Computer, eine Bauteilbeschreibung anfertigen, zum Beispiel durch ein CAD Anwendungsprogramm. Anschließend kann die Bauteilbeschreibung über ein Kommunikationsnetzwerk, wie dem Internet, an die Simulationseinheit übertragen werden. Dazu kann die Simulationseinheit eine entsprechende Kommunikationseinheit aufweisen. Darüber hinaus ist es in einer Ausführungsform möglich, dass die Kommunikationseinheit dazu ausgebildet sein kann, die mechanischen Eigenschaften des zu fertigenden Bauteils, die durch die Prädiktionseinheit angegeben sind, an das Benutzerterminal zu übertragen. Somit kann ein Benutzer unmittelbar erkennen, ob eine Bauteilbeschreibung gewünschten Lastfällen genügt bzw. so eingesetzt werden kann, wie der Benutzer es wünscht.

Die Aufgabe wird ferner insbesondere gelöst durch ein Verfahren zum Angeben von mechanischen Eigenschaften für ein zu fertigendes Bauteil mit amorphen Eigenschaften, die folgenden Schritte aufweisend:
- Bestimmen eines Abkühlverhaltens zumindest eines Teils eines zu fertigenden Bauteils mit amorphen Eigenschaften;
- Bestimmen mindestens eines Amorphizitätswertes unter Berücksichtigung des bestimmten Abkühlverhaltens zumindest für einen Teil des zu fertigenden Bauteils;
- Angeben von mechanischen Eigenschaften des zu fertigenden Bauteils unter Berücksichtigung einer Geometrie des zu fertigenden Bauteils, mindestens eines Herstellungsparameters, des mindestens einen Amorphizitätswertes und/oder eines Herstellungsverfahrens.

In einer Ausführungsform kann das Verfahren ein Speichern von Zuordnungen von Materialeigenschaften und/oder Materialien zu Amorphizitätswerten aufweisen.

In einer Ausführungsform kann das Verfahren ein Bestimmen einer Abkühlgeschwindigkeit für zumindest einen Teil des zu fertigenden Bauteils unter Berücksichtigung des simulierten Abkühlverhaltens aufweisen.

In einer Ausführungsform kann das Verfahren ein Vergleichen einer/der bestimmten Abkühlgeschwindigkeit mit einer, insbesondere legierungsabhängigen, kritischen Abkühlrate aufweisen, wobei die Bestimmung des Amorphizitätswertes unter Berücksichtigung des Vergleichs durchgeführt werden kann.

In einer Ausführungsform kann das Verfahren ein Speichern einer Zuordnung von Materialeigenschaften zu kritischen Abkühlraten und/oder Amorphizitätswerten aufweisen, insbesondere in einer Datenbankeinheit.

In einer Ausführungsform kann das zu fertigende Bauteil durch eine Bauteilbeschreibung, insbesondere durch ein CAD-Modell, angegeben sein, wobei die Bestimmung des Abkühlverhaltens unter Verwendung der Bauteilbeschreibung ausgeführt werden kann.

In einer Ausführungsform kann eine/die Bauteilbeschreibung eine Vielzahl von Volumenelementen angeben, wobei das Bestimmen des Abkühlverhaltens das Bestimmen des Abkühlverhaltens für zumindest einen Teil der Volumenelemente, vorzugsweise für alle Volumenelemente, umfassen kann.

In einer Ausführungsform kann das Abkühlverhalten auch unter Berücksichtigung einer zu verwendenden Legierung bestimmt werden.

In einer Ausführungsform kann das Verfahren ein Simulieren mindestens eines mechanischen Lastfalls für das zu fertigende Bauteil aufweisen, insbesondere unter Verwendung einer/der Bauteilbeschreibung und/oder einer FEM-Simulation.

In einer Ausführungsform kann das Verfahren ein Fertigen des zu fertigenden Bauteils unter Verwendung des mindestens einen Herstellungsparameters aufweisen, insbesondere durch ein additives Fertigungsverfahren oder ein Spritzgießverfahren.

In einer Ausführungsform kann das Verfahren ein Übertragen einer Bauteilbeschreibung des zu fertigenden Bauteils über ein Kommunikationsnetzwerk von einem Benutzerterminal an eine Simulationseinheit aufweisen, insbesondere über ein Kommunikationsnetzwerk.

Die Aufgabe wird ferner insbesondere gelöst durch ein computerlesbares-Speichermedium, welches Instruktionen enthält, die mindestens einen Prozessor dazu veranlassen, ein Verfahren, wie es vorstehend beschrieben ist, zu implementieren, wenn die Instruktionen durch den mindestens einen Prozessor ausgeführt werden.

Es ergeben sich ähnliche oder identische Vorteile, wie sie bereits im Zusammenhang mit dem System beschrieben worden sind.

Weitere Ausführungsformen ergeben sich aus den Unteransprüchen.

Im Folgenden wird die Erfindung an Hand von Ausführungsbeispielen näher erläutert. Dabei zeigen:
- Figur 1:: eine schematische Darstellung einer Spritzgussmaschine;
- Figur 2:: eine schematische Darstellung eines Werkzeugs;
- Figur 3:: eine schematische Darstellung eines Systems;
- Figur 4:: eine beispielhafte Datenbanktabelle;
- Figur 5:: eine weitere beispielhafte Datenbanktabelle mit kritischen Abkühlraten
- Figur 6:: einen Temperaturverlauf für ein Bauteil;
- Figur 7:: eine Zuordnung von Temperaturverläufen zu Volumenelementen einer Bauteilbeschreibung;
- Figur 8:: eine Darstellung eines zu fertigenden Bauteils mit entsprechenden Lastfällen; und
- Figur 9:: ein Flussdiagramm für ein Verfahren zum Fertigen eines Bauteils.

Im Folgenden werden für gleiche oder gleichwirkende Teile dieselben Bezugsziffern verwendet.

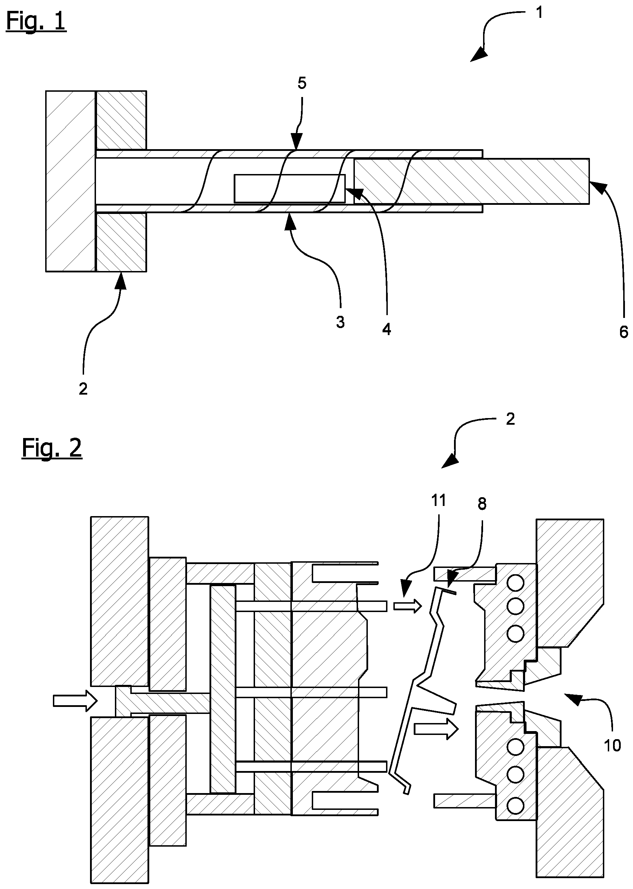

Die Figur 1 zeigt eine schematische Darstellung einer AMM (Amorphous-Metal)-Spritzgussanlage 1. Die Spritzgussanlage 1 umfasst eine Form im Werkzeug 2 und eine Schmelzkammer 3. Der Schmelzkammer 3 wird über einen Roboter ein massives Legierungssegment einer amorph erstarrenden Legierung (Rohling) 4 zugeführt und mittig in einer Induktionsspule 5 platziert. Der Rohling 4 wird innerhalb der Schmelzkammer 3 mittels eines Heizelements insbesondere eines Induktionsfeldes, welches durch die Induktionsspule 5 erzeugt wird, erhitzt. Bei dem Rohling 4 handelt es sich um ein massives Legierungssegment einer amorph erstarrenden Legierung. Das Legierungssegment 4 weist zum Beispiel einen bestimmten Anteil Palladium, Platin, Zirconium, Titan, Kupfer, Aluminium, Magnesium, Niobium, Silizium und/oder Yttrium auf.

Durch das Heizelement bzw. die Induktionsspule 5 wird der Rohling 4 zum Schmelzen gebracht, sodass er in schmelzflüssiger Form vorliegt. Vorzugsweise wird der Rohling 4 auf eine Temperatur von 1050 °C aufgeheizt. Durch einen Kolben 6 wird das schmelzflüssige Material in das Werkzeug 2 eingespritzt.

Figur 2 zeigt den schematischen Aufbau eines Spritzwerkzeuges. Mittels einer oder einer Vielzahl von Öffnungen 10, die in eine Formkammer 11 eines Werkzeuges 2 führen, wird die Formkammer 11 mit einer Schmelze gefüllt. Die Formkammer 11 ist als eine Negativform des herzustellenden Bauteils 8 ausgelegt. In dem Ausführungsbeispiel der Figur 2 ist vorgesehen, dass eine Öffnung 10 dazu verwendet werden kann, flüssiges Material in die Formkammer 11 zu führen. Es kann vorteilhaft sein, mehrere Angüsse zur Füllung der Formkammer 11 zu nutzen, um eine gleichmäßige Temperaturverteilung zu erzielen als auch, um Verwirbelungen der Schmelze zu verringern. Eine gleichmäßige Temperaturverteilung und eine geringe Anzahl von Verwirbelungen führen zu einem besseren Kühlvorgang, zu einer homogenen Abkühlung und damit zu gleichmäßigen amorphen Materialeigenschaften.

Innerhalb der Formkammer 11 muss das flüssige Material schnell auskühlen, um eine Kristallisation zu verhindern. Das Auskühlen des flüssigen Materials hängt stark von der Geometrie des herzustellenden Bauteils bzw. Werkstücks 8 ab.

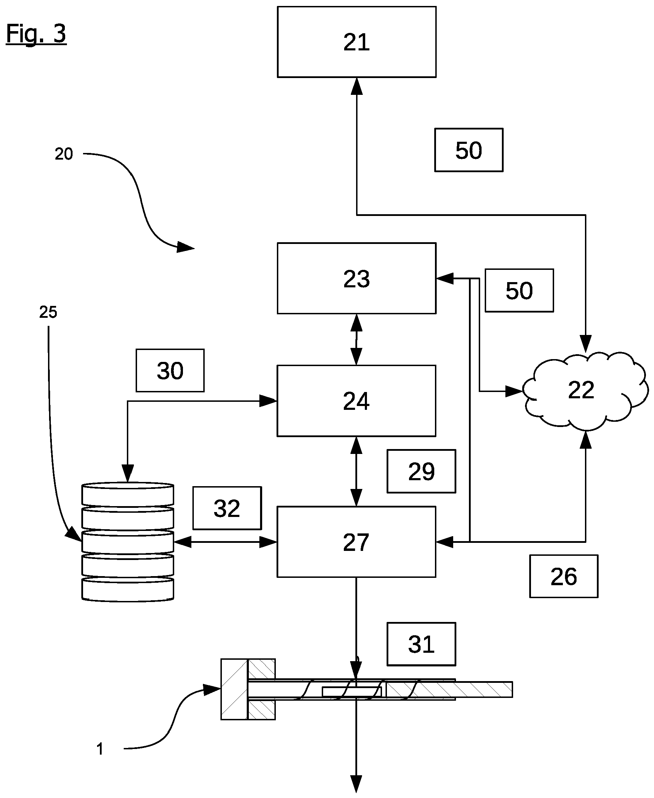

Figur 3 zeigt ein System 20, mit dem die mechanischen Eigenschaften eines zu fertigenden Bauteils 8 bestimmt bzw. angegeben werden können. Das System 20 umfasst eine Simulationseinheit 23, eine Recheneinheit 24 und eine Prädiktionseinheit 27. Ein Benutzer kann über eine Eingabeeinheit 21 eine Bauteilbeschreibung 50, zum Beispiel in Form eines CAD Modells über ein Kommunikationsnetzwerk 22 an die Simulationseinheit 23 übertragen. Zum Beispiel kann der Benutzer über eine Weboberfläche die Bauteilbeschreibung 50 auf einen Server hochladen. Der Server kann dazu einen Webserver ausführen. Im Anschluss kann der Server die Bauteilbeschreibung 50 an die Simulationseinheit 23 übertragen.

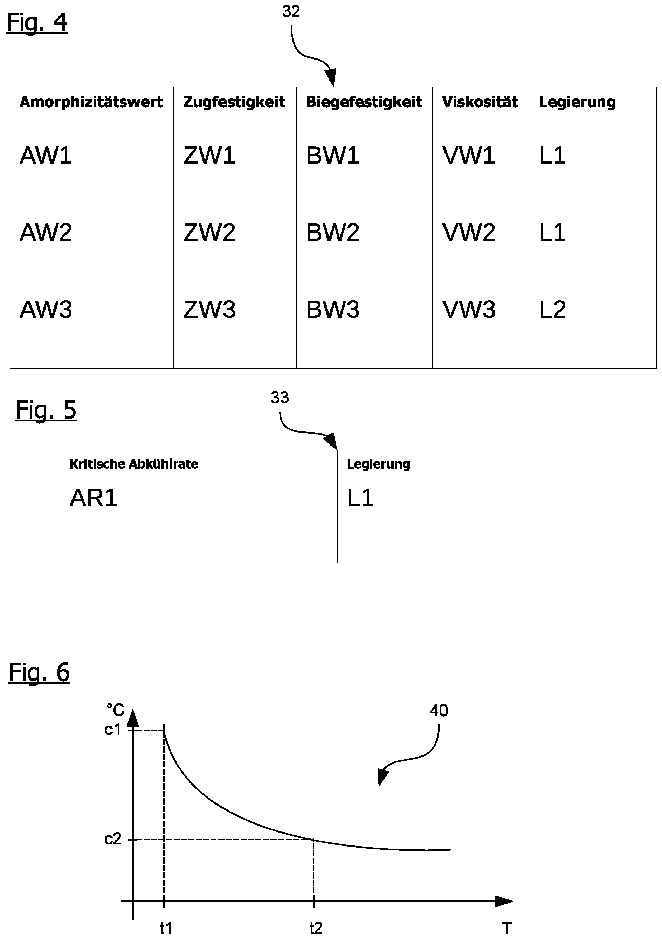

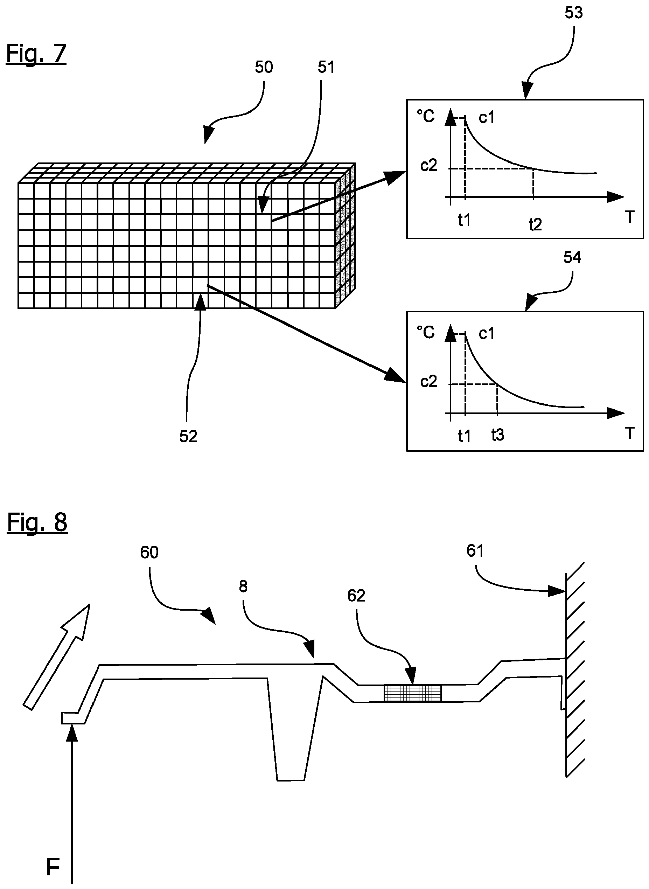

Die Simulationseinheit 23 ist dazu ausgebildet, ein Abkühlverhalten zumindest eines Teils eines zu fertigenden Bauteils 8 zu bestimmen. Das zu fertigende Bauteil 8 wird in dem gezeigten Ausführungsbeispiel über die Bauteilbeschreibung 50 angegeben. Das Bestimmen des Abkühlverhaltens durch die Simulationseinheit 23 ist in den Figuren 6 und 7 im Detail beschrieben.

Die Simulationseinheit 23 ist insbesondere dazu ausgebildet, das Temperaturverhalten für ein bestimmtes Fertigungsverfahren zu bestimmen. Dabei kann die Simulationseinheit 23 auch dazu ausgebildet sein, einen Einspritzvorgang und/oder das Temperaturverhalten während eines Einspritzvorgangs durch einen Stempel 7 zu bestimmen. Insbesondere kann die Simulationseinheit 23 dazu ausgebildet sein, die Temperatur nach dem Einspritzvorgang zu bestimmen. Diese Temperatur kann als Ausgangstemperatur herangezogen werden, um eine Abkühlgeschwindigkeit zu bestimmen. Um amorphe Eigenschaften des zu fertigenden Bauteils 8 sicherzustellen, ist es von Vorteil, wenn die Temperatur nach dem Einspritzen höher als ein Schwellwert, zum Beispiel 850°C, ist.

Ausgehend von der Ausgangstemperatur kann im Anschluss durch die Simulationseinheit 23 das Abkühlverhalten bestimmt werden.

Das Temperaturverhalten kann beispielsweise als ein Vektor gespeichert sein, der Elemente enthält, die Temperaturen zu bestimmten Zeitpunkten angeben.

Die Recheneinheit 24 ist dazu ausgebildet, mindestens einen Amorphizitätswert 29 für zumindest ein Teil des zu fertigenden Bauteils 8 zu bestimmen. Dabei kann die Recheneinheit 24 einen einzigen Amorphizitätswert 29 für das gesamte zu fertigende Bauteil 8 berechnen oder eine Vielzahl von Amorphizitätswerten 29 für verschiedene Bereiche des zu fertigenden Bauteils 8. Insbesondere, wenn die Bauteilbeschreibung 50 eine Vielzahl von Volumenelementen angibt, kann die Recheneinheit 24 dazu ausgebildet sein, für jedes Volumenelement einen Amorphizitätswert 29 zu bestimmen.

Die Recheneinheit 24 ist in dem gezeigten Ausführungsbeispiel dazu ausgebildet, den mindestens einen Amorphizitätswert 29 durch einen Vergleich einer Abkühlgeschwindigkeit, die durch das Abkühlverhalten angegeben sein kann, mit einer kritischen Abkühlrate 30, zu bestimmen. Liegt die bestimmte Abkühlgeschwindigkeit über der kritischen Abkühlrate 30, so werden amorphe Eigenschaften bei dem zu fertigenden Bauteil 8 erreicht. Liegt die bestimmte Abkühlgeschwindigkeit unterhalb der kritischen Abkühlrate 30, werden keine amorphen Eigenschaften bei dem zu fertigenden Bauteil 8 erreicht. Je nach Stärke der Abweichung der bestimmten Abkühlgeschwindigkeit von der kritischen Abkühlrate 30 kann der Amorphizitätswert 29 einen niedrigen oder einen hohen Wert einnehmen. So kann beispielsweise ein niedriger Amorphizitätswert bestimmt werden, wenn die bestimmte Abkühlgeschwindigkeit deutlich unter der kritischen Abkühlrate 30 liegt. Ein hoher Amorphizitätswert kann bestimmt werden, wenn die bestimmte Abkühlgeschwindigkeit deutlich über der kritischen Abkühlrate 30 liegt.

Die Recheneinheit 24 ist in dem gezeigten Ausführungsbeispiel dazu ausgebildet, die kritische Abkühlrate 30 für eine bestimmte Legierung bzw. für ein bestimmtes Material aus der Datenbankeinheit 25 abzufragen. Die Datenbankeinheit 25 speichert hierzu zu einer Vielzahl von Legierungen bzw. Materialien die entsprechenden kritischen Abkühlraten 30.

Darüber hinaus ist es denkbar, dass der Amorphizitätswert 29 eine Angabe darüber enthält, wie viele Bereiche des zu fertigenden Bauteils 8 über amorphe Eigenschaften verfügen werden. Beispielsweise kann der Amorphizitätswert 29 als eine Prozentangabe interpretiert werden, die angibt, welcher Anteil an Volumenelementen der Bauteilbeschreibung 50 bzw. der zugehörigen Teilbereiche des zu fertigenden Bauteils 8 über amorphe Eigenschaften verfügen wird.

Die Prädiktionseinheit 27 ist dazu ausgebildet, für den bestimmten Amorphizitätswert 29 und ein entsprechendes Material bzw. eine entsprechende Legierung Materialeigenschaften 32 aus der Datenbankeinheit 25 auszulesen. Die Datenbankeinheit 25 ist dazu ausgebildet zu Paaren von Amorphizitätswerten und einer Legierung bzw. einem Material, eine Vielzahl von Materialeigenschaften 32 zu speichern.

Unter Verwendung der abgefragten Materialeigenschaften 32 ist die Prädiktionseinheit 27 nunmehr in der Lage, mechanische Eigenschaften 26 für das zu fertigende Bauteil 8 bzw. die Bauteilbeschreibung 50 zu bestimmen.

Darüber hinaus ist die Prädiktionseinheit 27 dazu ausgebildet, zu prüfen, ob die mechanischen Eigenschaften 26 des zu fertigenden Bauteils 8 benutzerdefinierten Lastfällen standhalten. Ist dies der Fall, so kann eine Produktionsanlage, zum Beispiel eine Spritzgussmaschine 28, das Bauteil 8 unter Verwendung der entsprechenden Herstellungsparameter 31 fertigen. Darüber hinaus ist es möglich, dass die Prädiktionseinheit 27 dazu ausgebildet ist, die mechanischen Eigenschaften 26 an das Benutzerterminal 21 über das Kommunikationsnetzwerk 22 zu übertragen.

Die Figur 4 zeigt eine Tabelle 32, die durch die Datenbankeinheit 25 gespeichert sein kann.

Die Tabelle 32 umfasst Spalten mit Angaben zu Amorphizitätswerten, Zugfestigkeitswerten, Biegefestigkeitswerten, Viskositätswerten, und/oder Legierungen. Somit findet insbesondere eine Zuordnung von Legierung und Amorphizitätswert zu Materialeigenschaften statt. So umfasst die Tabelle 30 zwei Zeilen für die Legierung L1, der unterschiedliche Amorphizitätswerte zugeordnet sind. Daraus ergeben sich auch unterschiedliche Materialeigenschaften, wie Zugfestigkeit und Biegefestigkeit. So wird für eine Legierung L1 und einem zugehörigen Amorphizitätswert AW1 eine Zugfestigkeit ZW1 und eine Biegefestigkeit BW1 sowie eine Viskosität VW1 gespeichert. Für die Legierung L1 wird für einen zweiten Amorphizitätswert AW2 entsprechend eine Zugfestigkeit ZW2, eine Biegefestigkeit BW2 und eine Viskosität VW2 gespeichert.

Durch eine Abfrage an die Datenbankeinheit 25 mittels eines Tupels, welches einen Amorphizitätswert und eine Legierung angibt, können somit Materialeigenschaften abgefragt werden.

Figur 5 zeigt eine zweite Datenbanktabelle 33, die Zuordnungen von kritischen Abkühlraten zu Legierungen speichert. Wie aus der Figur 5 erkennbar ist, wird einer Legierung L1 eine kritische Abkühlrate AR1 zugeordnet. Dadurch wird es der Recheneinheit 24 ermöglicht, für eine bestimmte Legierung L1 eine entsprechende kritische Abkühlrate AR1 auszulesen.

Figur 6 zeigt einen beispielhaften Temperaturverlauf 40. Das Ausführungsbeispiel der Figur 6 bezieht sich auf den inneren Teil des zu fertigenden Bauteils 8. Wie gezeigt ist, fällt die Temperatur von einer Ausgangstemperatur C1 zu einem Zeitpunkt t1 auf eine Temperatur C2 ab, die zu einem Zeitpunkt t2 erreicht ist.

Es kann daher eine Abkühlgeschwindigkeit ermittelt werden, die den Temperaturabfall, d. h. die Temperaturdifferenz C1 - C2, im Intervall von t1 bis t2 angibt. Darüber hinaus ist es möglich, festzustellen, ob die Abkühlgeschwindigkeit hoch genug ist, um eine Kristallisation zu verhindern. Die Abkühlgeschwindigkeit, mit der eine Kristallisation verhindert wird, kann als kritische Abkühlrate bezeichnet werden. Um festzustellen, ob ein zu fertigendendes Bauteil bzw. Werkstück über amorphe Eigenschaften verfügen wird, ist es daher möglich, zu ermitteln, ob die Abkühlgeschwindigkeit an jeder Stelle des Bauteils größer ist als die kritische Abkühlrate ist.

Der Temperaturverlauf 40 beschreibt somit das Abkühlverhalten eines Teils eines zu fertigenden Bauteils 8. Die Recheneinheit 24 kann daher unter Verwendung des Temperaturverlauf 40 durch einen Vergleich mit der aus der Datenbankeinheit 25 abgefragten kritischen Abkühlrate AR1 feststellen, ob das zu fertigen Bauteil 8 gemäß der Bauteilbeschreibung 50 über amorphe Eigenschaften verfügen wird.

Bauteile können durch eine Bauteilbeschreibung 50 digital beschrieben werden, z.B. mit einer CAD-Datei. So zeigt die Figur 7 eine Bauteilbeschreibung 50 eines Quaders, die aus einer Vielzahl von Volumenelementen 51, 52 aufgebaut ist. Bei der Bauteilbeschreibung 50 kann es sich also beispielsweise um ein CAD-Modell handeln, welches mittels einer Simulationssoftware in einzelne Volumenelemente 51, 52 unterteilt ist. Für jedes Volumenelement 51, 52 der Bauteilbeschreibung 50 kann nun das Temperaturverhalten simuliert bzw. vorhergesagt werden.

So zeigt die Figur 7, dass einem ersten Volumenelement 51 ein erster Temperaturverlauf 53 zugeordnet ist. Einem zweiten Volumenelement 52 ist ein zweiter Temperaturverlauf 54 zugeordnet. Die Temperaturverläufe 53, 54 zeigen den Temperaturabfall von einer Ausgangstemperatur C1 auf eine Grenztemperatur C2. Das Material des Bauteils 8, welches durch die Bauteilbeschreibung 50 angegeben ist, hat beispielsweise eine Temperatur von ca. 850 °C, wenn es in die Form 2 eingespritzt wurde. Die Glasübergangstemperatur einer beispielhaften Zr-basierten Legierung liegt bei ca. 410 °C. Wenn das Material schnell genug unter die kritische Temperatur, d.h. Glasumwandlungstemperatur, heruntergekühlt wird, so werden amorphe Strukturen erhalten. Sollte die kritische Abkühlrate unterschritten werden, erstarrt die Schmelze im kristallinen und nicht im amorphen Zustand.

Wie aus der Figur 7 erkennbar ist, wird bei dem ersten Temperaturverlauf 53 die Grenztemperatur C2 zu einem Zeitpunkt t2 erreicht. Bei dem zweiten Temperaturverlauf 54 wird die Grenztemperatur C2 zu einem Zeitpunkt t3 erreicht. Wie aus dem ersten und dem zweiten Temperaturverlauf 53, 54 erkennbar ist, liegt der Zeitpunkt t3 vor dem Zeitpunkt t2. Das bedeutet, dass die Temperatur im Temperaturverlauf 53, welcher dem ersten Volumenelement 51 zugeordnet ist, langsamer fällt als im zweiten Temperaturverlauf 54, welcher dem zweiten Volumenelement 52 zugeordnet ist. Die Abkühlgeschwindigkeit im zweiten Temperaturverlauf 54 ist daher größer als im ersten Temperaturverlauf 53. Setzt man voraus, dass die Abkühlgeschwindigkeit in dem ersten Temperaturverlauf 53 kleiner als die notwendige kritische Abkühlrate zum Erhalt von amorphen Strukturen ist, muss die Bauteilbeschreibung 50 angepasst werden, um die Wärme schneller aus dem Bauteil heraus zu befördern, sodass die Abkühlgeschwindigkeit an der Stelle des ersten Volumenelements 51 größer als die kritische Abkühlrate ist. Hierzu kann beispielsweise eine andere Legierung mit einer anderen kritischen Abkühlrate herangezogen werden.

Die Temperaturdiagramme 53 und 54 können unter Verwendung einer Simulationseinheit 23 erzeugt werden. Das bedeutet, dass für jedes Volumenelement 51, 52 eine Simulation des Temperaturverhaltens ausgeführt wird. Damit ist es möglich, die Temperaturdiagramme 53 und 54 sehr genau zu bestimmen. Die Ergebnisse der Simulationseinheit 23 können als Abkühlverhalten digital bereitgestellt werden, z.B. als ein Objekt in einer objektorientierten Programmiersprache. Es ist jedoch auch möglich, dass das Abkühlverhalten als Textdatei oder in einem anderen beliebigen Format bereitgestellt wird.

Durch die Betrachtung einzelner Volumenelemente 51, 52 ist es darüber hinaus möglich, Amorphizitätswerte 29 für jedes einzelne Volumenelement 51, 52 zu bestimmen. Insbesondere ist es möglich, einzelne Volumenelemente zu identifizieren, bei denen die kritische Abkühlrate 30 nicht erreicht wird. Darüber hinaus ist es möglich, festzustellen, welche Teile der Bauteilbeschreibung 50 über welche Materialeigenschaften verfügen. Dies kann unter Verwendung der Datenbankeinheit 25 und der Prädiktionseinheit 27 ausgeführt werden.

Kommt es zum Beispiel in einigen Bereichen des gefertigten Bauteils zu kristallinen Strukturen, so kann zum Beispiel für bestimmte Anwendungsfälle eine bestimmte Bruchgefahr bestehen.

Figur 8 illustriert einen Lastfalls 60, der das Verhalten des zu fertigenden Bauteils 8 bei einer angreifenden Kraft F. Das Bauteil 8 ist in der Figur 8 auf seiner rechten Seite an einer Wand 61 festgestellt. Durch die Prädiktionseinheit 27 ist für das zu fertigende Bauteil 8 bestimmt, dass sich bei der Fertigung ein kristalliner Bereich 62 an den zu fertigen Bauteil 8 ausbilden wird. Durch die Prädiktionseinheit 27 kann nunmehr simuliert werden, ob das zu fertigende Bauteil 8 trotz des kristallinen Bereichs 62 definierten Lastfällen standhält. Wird durch eine Simulation festgestellt, dass das zu fertigende Bauteil 8 dem Lastfalls 60 standhält, so kann das zu fertigende Bauteil 8 produziert werden. Wird hingegen festgestellt, dass das zu fertigende Bauteil 8 dem Lastfall nicht standhält, so kann zum Beispiel eine andere Legierung ausgewählt werden, um das Ausbilden des kristallinen Bereichs 62 zu verhindern.

An seiner linken Seite wird durch den Lastfalls 60 eine von unten wirkende Kraft F angegeben. Durch eine Simulation kann das Verhalten des zu fertigenden Bauteils 8 auf diese Kraft F berechnet werden. Durch das Angreifen der Kraft F an der linken Seite und das Feststellen des Bauteils 8 auf rechten Seite kommt es zu einer Biegung des zu fertigenden Bauteils 8. In dem gezeigten Ausführungsbeispiel der Figur 8 wird angenommen, dass das zu fertigende Bauteil 8 dem Lastfall nicht standhält, und es zu einem Bruch am kristallinen Bereichs 62 kommt.

Die Prädiktionseinheit 27 ist nun dazu ausgebildet, die Simulationseinheit 23 zu aktivieren. Dabei wird der Simulationseinheit 23 eine Angabe übermittelt, dass die bisher gewählte Legierung nicht ausreichend ist. Die Simulationseinheit 23 ist daher dazu ausgebildet, das Abkühlverhalten für eine zweite Legierung zu bestimmen und die Bauteilbeschreibung 50 entsprechend anzupassen, sodass die Bauteilbeschreibung 50 die entsprechenden Informationen trägt.

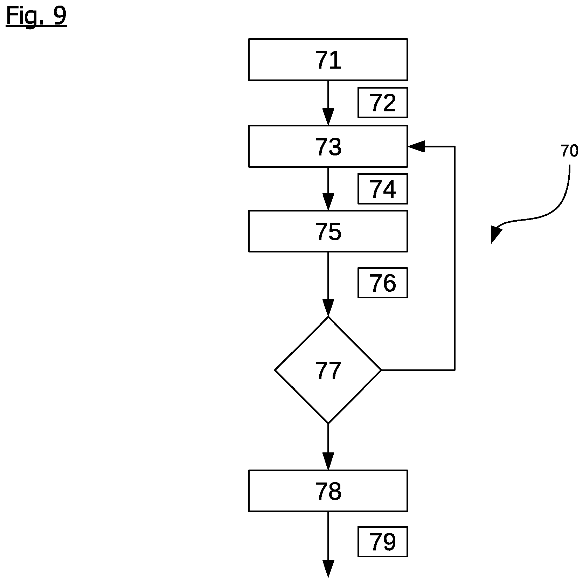

Die Figur 9 zeigt ein Flussdiagramm für ein Verfahren 70 zum Fertigen eines Bauteils 79. In einem Eingabeschritt 71 definiert ein Benutzer eine Bauteilbeschreibung 72, die ein zu fertigendes Bauteil 8 beschreibt. Die Bauteilbeschreibung 72 kann über ein Kommunikationsnetzwerk an eine Simulationseinheit 24 übertragen werden. Im Simulationsschritt 73 kann eine Simulationseinheit 24 ein Temperaturverhalten 74 für die Bauteilbeschreibung 72 bestimmen/simulieren.

In Schritt 75 wird das Temperaturverhalten verwendet, um mindestens einen Amorphizitätswert 76 zu bestimmen. Dazu kann aus einer Datenbankeinheit 25 eine kritische Abkühlrate für eine durch die Bauteilbeschreibung 72 angegebene Legierung ausgelesen werden.

Im Vergleichsschritt 77 wird der bestimmte Amorphizitätswert 76 mit einem Sollwert verglichen oder es werden ermittelte mechanische Eigenschaften des zu fertigenden Bauteils 8 auf Lastfälle geprüft. Wird festgestellt, dass der Amorphizitätswert 76 nicht den Anforderungen des Sollwerts entspricht, oder dass das zu fertigende Bauteil 8 nicht den Lastfällen genügt, so wird das Verfahren in Schritt 73 fortgeführt. Dazu wird im Simulationsschritt 73 das Verfahren mit einer noch nicht verwendeten Legierung neu gestartet, da für diese ein anderes Temperaturverhalten und eine andere kritische Abkühlrate gelten.

Wird festgestellt, dass der Amorphizitätswert 76 den Anforderungen des Sollwerts entspricht oder das zu fertigende Bauteil 8 den Lastfällen genügt, so kann im Fertigungsschritt 78 das Bauteil 79 unter Verwendung der Bauteilbeschreibung 72 angefertigt werden.

An dieser Stelle sei darauf hingewiesen, dass alle oben beschriebenen Teile jeweils für sich - auch ohne im jeweiligen Zusammenhang zusätzlich beschriebene Merkmale, selbst wenn diese nicht explizit als optionale Merkmale im jeweiligen Zusammenhang individuell kenntlich gemacht worden sind, z. B. durch Verwendung von: insbesondere, vorzugsweise, beispielsweise, z. B., ggf. , runden Klammern, etc. - und in Kombination oder jeglicher Unterkombination als eigenständige Ausgestaltungen bzw. Weiterbildungen der Erfindung, wie sie insbesondere in der Beschreibungseinleitung sowie den Ansprüchen definiert ist, anzusehen sind. Abweichungen hiervon sind möglich. Konkret sei darauf hingewiesen, dass das Wort insbesondere oder runde Klammern keine im jeweiligen Kontext zwingende Merkmale kennzeichnen.

### Bezugszeichenliste

- 1: Spritzgussmaschine
- 2: Form
- 3: Schmelzkammer
- 4, 4': Heizelement
- 5: Einfülltrichter
- 6: Schnecke
- 7: Stempel
- 8: flüssiges Ausgangsmaterial
- 9: Leitungssystem
- 10, 10', 10", 10'": Einlassöffnung
- 11: Formkammer
- 20: System
- 21: Eingabeeinheit
- 22: Kommunikationsnetzwerk
- 23: Simulationseinheit
- 24: Recheneinheit
- 25: Datenbankeinheit
- 26: Mechanische Eigenschaften
- 27: Prädiktionseinheit
- 29, 75: Amorphizitätswert
- 30: Kritische Abkühlrate
- 31: Herstellungsparameter
- 32: Datenbanktabelle
- 33: Datenbanktabelle
- 40, 74: Temperaturverlauf
- 50, 72: Bauteilbeschreibung/CAD-Modell
- 51: erstes Volumenelement
- 52: zweites Volumenelement
- 53: erstes Temperaturdiagramm
- 54: zweites Temperaturdiagramm
- 60: Lastfall
- 61: Wand
- 62: kristalliner Bereich
- 70: Verfahren
- 71: Eingabeschritt
- 73: Simulationsschritt
- 77: Vergleichsschritt
- 78: Fertigungsschritt
- 79: gefertigtes Bauteil
- C1: Ausgangstemperatur
- C2: Zieltemperatur
- T1, T2: Zeitpunkt
- AW1, AW2, AW3: Amorphizitätswert
- ZW1, ZW2, ZW3: Zugfestigkeitswert
- BW1, BW2, BW3: Biegefestigkeitswert
- VW1, VW2, VW3: Viskositätswert
- L1, L2: Legierung

## Patentansprüche

1. System (20), Folgendes aufweisend:
- eine Simulationseinheit (23), die dazu ausgebildet ist, ein Abkühlverhalten (40, 53, 54, 72) zumindest eines Teils eines zu fertigenden Bauteils (8, 79) mit amorphen Eigenschaften zu bestimmen;
- eine Recheneinheit (24), die dazu ausgebildet ist, unter Berücksichtigung des bestimmten Abkühlverhaltens (40, 53, 54, 74) zumindest für einen Teil des zu fertigenden Bauteils (8, 79) mindestens einen Amorphizitätswert (29, 76, AW1, AW2, AW3) zu bestimmen;
- eine Prädiktionseinheit (27), die dazu ausgebildet ist, unter Berücksichtigung einer Geometrie des zu fertigenden Bauteils (8, 79), des mindestens einen Amorphizitätswertes (29, 76, AW1, AW2, AW3), mindestens eines Herstellungsparameters (31) und/oder eines Herstellungsverfahrens, mechanische Eigenschaften (26) des zu fertigenden Bauteils (8, 79) anzugeben.

2. System (20) nach Anspruch 1,
**gekennzeichnet durch**
eine Datenbankeinheit (25), die dazu ausgebildet ist, Zuordnungen von Materialeigenschaften (ZW1-ZW3, BW1-BW3, VW1-VW3, L1, L2) und/oder Materialangaben zu Amorphizitätswerten (AW1-AW3) zu speichern.

3. System (20) nach einem der vorhergehenden Ansprüche,
**dadurch gekennzeichnet, dass**
die Recheneinheit (24) ferner dazu ausgebildet ist, unter Berücksichtigung des bestimmten Abkühlverhaltens (40, 53, 54, 74), eine Abkühlgeschwindigkeit zumindest einen Teil des zu fertigenden Bauteils (8, 79) zu bestimmen.

4. System (20) nach einem der vorhergehenden Ansprüche, insbesondere nach Anspruch 3,
**dadurch gekennzeichnet, dass**
die Recheneinheit (24) ferner dazu ausgebildet ist, eine/die bestimmte Abkühlgeschwindigkeit mit einer, insbesondere legierungsabhängigen, kritischen Abkühlrate (30, AR1) zu vergleichen, wobei die Recheneinheit (24) dazu ausgebildet ist, die Bestimmung des Amorphizitätswertes (AW1-AW3) unter Berücksichtigung des Vergleichs durchzuführen.

5. System (20) nach einem der vorhergehenden Ansprüche, insbesondere nach Anspruch 4,
**dadurch gekennzeichnet, dass**
die Datenbankeinheit (25) dazu ausgebildet ist, eine Zuordnung von Materialeigenschaften (ZW1-ZW3, BW1-BW3, VW1-VW3, L1, L2) zu, kritischen Abkühlraten (30, AR1) und/oder Amorphizitätswerten (AW1-AW2) zu speichern.

6. System (20) nach einem der vorhergehenden Ansprüche,
**dadurch gekennzeichnet, dass**
das zu fertigende Bauteil (8, 79) durch eine Bauteilbeschreibung (50, 72), insbesondere durch ein CAD-Modell (50), angegeben ist, wobei die Simulationseinheit (23) dazu ausgebildet ist, die Bestimmung des Abkühlverhaltens (40, 53, 54, 74) unter Verwendung der Bauteilbeschreibung (50, 72) auszuführen.

7. System (20) nach einem der vorhergehenden Ansprüche, insbesondere nach Anspruch 6,
**dadurch gekennzeichnet, dass**
eine/die Bauteilbeschreibung (50, 72) eine Vielzahl von Volumenelementen (51, 52) angibt, wobei die Simulationseinheit (23) dazu ausgebildet ist, für zumindest einen Teil der Volumenelemente (51, 52), vorzugsweise für alle Volumenelemente (51, 52), ein Abkühlverhalten (53, 54, 74) zu bestimmen.

8. System (20) nach einem der vorhergehenden Ansprüche,
**dadurch gekennzeichnet, dass**
die Prädiktionseinheit (27) dazu ausgebildet ist, mindestens einen mechanischen Lastfall (60) für das zu fertigende Bauteil (8) zu simulieren, insbesondere unter Verwendung einer/der Bauteilbeschreibung (50, 72) und/oder einer FEM-Simulation.

9. System (20) nach einem der vorhergehenden Ansprüche,
**gekennzeichnet durch**
eine Fertigungsanlage (28), die dazu ausgebildet ist, das zu fertigende Bauteil (8, 79) unter Verwendung des mindestens einen Herstellungsparameters (30) zu fertigen, insbesondere durch ein additives Fertigungsverfahren oder ein Spritzgießverfahren.

10. Verfahren (70) zum Angeben von mechanischen Eigenschaften (ZW1-ZW3, BW1-BW3, L1, L2), für ein zu fertigendes Bauteil (8, 79) mit amorphen Eigenschaften, die folgenden Schritte aufweisend:
- Bestimmen (73) eines Abkühlverhaltens (40, 53,54, 74) zumindest eines Teils eines zu fertigenden Bauteils (8) mit amorphen Eigenschaften;
- Bestimmen (75) mindestens eines Amorphizitätswertes (29, 75, AW1, AW2, AW3) unter Berücksichtigung des bestimmten Abkühlverhaltens (40, 53, 54, 74) zumindest für einen Teil des zu fertigenden Bauteils (8, 79);
- Angeben (78) von mechanischen Eigenschaften (ZW1-ZW3, BW1-BW3, L1, L2) des zu fertigenden Bauteils (8, 79) unter Berücksichtigung einer Geometrie des zu fertigenden Bauteils (8, 79), des mindestens einen Amorphizitätswertes (29, 75, AW1, AW2, AW3), mindestens eines Herstellungsparameters (30) und/oder eines Herstellungsverfahrens.

11. Verfahren nach Anspruch 10,
**gekennzeichnet durch**
Speichern von Zuordnungen von Materialeigenschaften (ZW1-ZW3, BW1-BW3, VW1-VW3) und/oder Materialien (L1, L2) zu Amorphizitätswerten (AW1-AW3).

12. Verfahren nach einem der Ansprüche 10 oder 11,
**gekennzeichnet durch**
Bestimmen einer Abkühlgeschwindigkeit für zumindest einen Teil des zu fertigenden Bauteils (8, 79) unter Berücksichtigung des simulierten Abkühlverhaltens (40, 53, 54, 74).

13. Verfahren nach einem der Ansprüche 10 bis 12,
**gekennzeichnet durch**
Vergleichen (77) der bestimmten Abkühlgeschwindigkeit mit einer, insbesondere legierungsabhängigen, kritischen Abkühlrate (30, AR1), wobei die Bestimmung des Amorphizitätswertes (29, 75, AW1-AW3) unter Berücksichtigung des Vergleichs durchgeführt wird.

14. Verfahren nach einem der Ansprüche 10 bis 13,
**gekennzeichnet durch**
Speichern einer Zuordnung von Materialeigenschaften (ZW1-ZW3, BW1-BW3, VW1-VW3, L1, L2) zu kritischen Abkühlraten (30) und/oder Amorphizitätswerten (AW1-AW2), insbesondere in einer Datenbankeinheit (25).

15. Verfahren nach einem der Ansprüche 10 bis 14,
**dadurch gekennzeichnet, dass**
das zu fertigende Bauteil (8, 79) durch eine Bauteilbeschreibung (50, 72), insbesondere durch ein CAD-Modell (50, 72), angegeben ist, wobei die Bestimmung des Abkühlverhaltens (40, 53, 54, 74) unter Verwendung der Bauteilbeschreibung (50, 72) ausgeführt wird.

16. Verfahren nach einem der Ansprüche 10 bis 15, insbesondere nach Anspruch 15,
**dadurch gekennzeichnet, dass**
eine/die Bauteilbeschreibung (50, 72) eine Vielzahl von Volumenelementen (51, 52) angibt, wobei das Bestimmen des Abkühlverhaltens (40, 53, 54, 74) das Bestimmen des Abkühlverhaltens für zumindest einen Teil der Volumenelemente (51, 52), vorzugsweise für alle Volumenelemente (51, 52), umfasst.

17. Verfahren nach einem der Ansprüche 10 bis 16,
**gekennzeichnet durch**
Simulieren mindestens eines mechanischen Lastfalls (60) für das zu fertigende Bauteil (8, 79), insbesondere unter Verwendung einer/der Bauteilbeschreibung (50, 72) und/oder einer FEM-Simulation.

18. Verfahren nach einem der Ansprüche 10 bis 17,
**gekennzeichnet, durch**
Fertigen des zu fertigenden Bauteils (8, 79) unter Verwendung des mindestens einen Herstellungsparameters (30), insbesondere durch ein additives Fertigungsverfahren oder ein Spritzgießverfahren.

19. Computerlesbares-Speichermedium, welches Instruktionen enthält, die mindestens einen Prozessor dazu veranlassen, ein Verfahren nach einem der Ansprüche 10 bis 18 zu implementieren, wenn die Instruktionen durch den mindestens einen Prozessor ausgeführt werden.
